# EUROPÄISCHE PATENTANMELDUNG

(11) **EP 1 314 551 A1**
(43) Veröffentlichungstag der Anmeldung: **28.05.2003**
(21) Anmeldenummer: 02025464.5
(22) Anmeldetag: 15.11.2002
(51) Int. Cl.: B32B 31/00

(54) **Vorrichtung zum Laminieren oder Beschichten eines Substrates**

(30) Priorität: 24.11.2001 DE 10157366
(71) Anmelder: Kiener Maschinenbau GmbH, 73466 Lauchheim (DE)
(72) Erfinder: Kiener, Waldemar, 73466 Lauchheim (DE); Rein, Johann, 73441 Bopfingen (DE)
(74) Vertreter: Maser, Jochen, Dipl.-Ing.

(57) **Zusammenfassung**

Die Erfindung betrifft eine Vorrichtung zum Laminieren von zumindest einem Substrat (32) auf ein mit Klebemittel (19) beschichtetes Substrat (18) zur Bildung eines Laminats (36), bei der das mit Klebemittel (19) beschichtete Substrat (18) einem zwischen einer getriebenen Walze (16) und einer Laminierwalze (31) gebildeten Laminierpunkt (29) zugeführt wird, wobei das Substrat (32) über die Laminierwalze (31) auf das mit Klebemittel (19) versehenen Substrat (18) zugeführt wird und mit diesem in einem Laminierpunkt (29) verbunden wird und eine Vorrichtung zum Beschichten von einer Schicht auf einem Substrat zur Herstellung einer beschichteten Materialbahn, wobei das aus den Substraten (18,32) gebildete Laminat (36) oder die beschichtete Materialbahn unmittelbar nach dem Laminierpunkt zumindest um wenige Winkelgrade entlang der Laminierwalze (31) geführt ist und dass die Laminierwalze (31) als temperierbare Walze ausgebildet ist.

## Beschreibung

Die Erfindung betrifft eine Vorrichtung zum Laminieren von einem Substrat auf ein mit Klebemittel beschichtetes Substrat zur Bildung eines Laminats gemäß dem Oberbegriff des Anspruchs 1 und eine Vorrichtung zum Beschichten von zumindest einer Schicht auf einem Substrat zur Herstellung einer beschichteten Materialbahn gemäß dem Oberbegriff des Anspruchs 2.

Es sind bereits Vorrichtungen bekannt geworden, bei welchen ein Substrat auf einer mit Klebemittel beschichteten ersten Schicht zur Bildung eines Laminats auflaminiert wird. Hierfür sind eine getriebene Walze und eine Laminierwalze vorgesehen, welche einen Spalt bildend zueinander beabstandet sind, wobei durch den Spalt ein Laminierpunkt gebildet ist. Die mit Klebemittel beschichtete Schicht wird bspw. horizontal durch den Spalt hindurch geführt, so dass diese Schicht nur im Laminierpunkt an der Laminierwalze und der getriebenen Walze anliegt. Das Laminat wird nach dem Laminierpunkt durch Abheben von der getriebenen Walze und der Laminierwalze abgeführt. Analoges gilt für die beschichtete Materialbahn.

Derartige Vorrichtungen werden zum Herstellen von Laminaten und Materialbahnen für unterschiedliche Anwendungszwecke eingesetzt. Hierbei kann es sich beispielsweise um luftdurchlässige oder atmungsaktive Textilien handeln, vollflächige, teilweise oder poröse Beschichtungen handeln Dabei werden auch Substrate unterschiedlicher Dicke, Steifigkeit und Gewicht pro m² laminiert oder beschichtet.

Die oben beschriebene Vorrichtung weist insbesondere beim Laminieren von zwei unterschiedlichen Substraten, bei denen das eine Substrat bspw. schwerer als das andere ist, den Nachteil auf, dass das Laminat nach dem Verlassen des Laminierpunktes sich löst, da das Klebemittel noch nicht vollständig ausgehärtet ist, um die Substrate fest zueinander zu verbinden. Insbesondere bei einer entfernt zu dem Laminierpunkt angeordnete weiteren Walze kann das Laminat durchhängen, wodurch insbesondere sich das schwere Substrat von dem leichteren Substrat lösen kann. Ähnliche gilt bei den beschichteten Materialbahnen.

Der Erfindung liegt deshalb die Aufgabe zugrunde, eine Vorrichtung zur Herstellung eines Laminats mit zumindest zwei Substraten oder einer beschichteten Materialbahn zu schaffen, welche insbesondere bei unterschiedlichen Substraten oder Schichten, auch bei größeren Mengen an Klebemitteln eine feste Laminatverbindung oder Beschichtung ermöglicht.

Diese Aufgabe wird erfindungsgemäß durch die Merkmale des Anspruchs 1 oder 2 gelöst.

Durch das Anliegen des Laminats zumindest um wenige Winkelgrade an einer Laminierwalze und einer gleichzeitig erfolgenden Temperierung, insbesondere Kühlung des Laminats ist ermöglicht, dass das Klebemittel von einem plastischen in einen festen Zustand übergeführt wird und eine feste Verbindung zwischen den zwei laminierten Substraten ausgebildet wird. Durch das Ruhen der zwei zueinander laminierten Substrate auf der Laminierwalze werden gleichzeitig zwischen dem Laminierpunkt und dem Abzug des Laminats von der Laminierwalze die Substratschichten gegen eine Mantelfläche der Laminierwalze gedrückt, so dass unter zumindest geringer Pressung aufgrund der Bahnspannung eine Verbindung der Substrate ermöglicht ist. Durch die Ausbildung der Laminierwalze als temperierte Walze kann eine erhöhte Menge an Wärme des aufgeheizten Klebemittels und die Reaktionswärme des Klebemittels beim Aushärten zumindest hinreichend abgeführt werden. Dadurch wird erzielt, dass die laminierten Substrate von der Laminierwalze erst abgehoben werden, nachdem das Klebemittel sich verfestigt hat, so dass ein fertiges Laminat von der Laminierwalze abgezogen wird.

Analoges gilt für die Herstellung einer beschichteten Materialbahn. Hierbei wird die zumindest eine Schicht fest zum Substrat verbunden. Die Vorteile und Wirkungen sind bei der Herstellung der beschichteten Materialbahn dieselben, wie bei der Herstellung des oben beschriebenen Laminats.

Vorteilhafterweise ist vorgesehen, dass das Laminat nach Durchlaufen des Laminierpunktes entlang der Laminierwalze mit einem Umschlingungswinkel von wenigsten 45°, vorzugsweise wenigstens 180°, geführt ist. Dadurch ist ermöglicht, dass das Ruhen des Laminats auf der Laminierwalze über einen langen Zeitraum gegeben ist und eine hinreichende Wärmeabfuhr gewährleistet ist, so dass das Klebemittel vor Abheben des Laminats von der Laminierwalze von einem viskosen oder pastösen Zustand zumindest in einen klebenden und festen Zustand übergegangen ist, der die beiden Substrate zu einem Laminat zusammenhält. Des weiteren kann durch den erhöhten Umschlingungswinkel über eine längere Verweildauer ein Zusammenpressen der Substrate aufgrund der Bahnspannung erzielt werden.

Eine bevorzugte Ausführungsform sieht vor, dass die als Kühlwalze ausgebildete Laminierwalze wenigstens den zweifachen Durchmesser der getriebenen Walze aufweist. Durch diese Ausgestaltung kann des weiteren erzielt werden, dass bspw. zusätzlich zur Erhöhung des Umschlingungswinkels das Laminat eine größere Wegstrecke bis zum Abheben von der Laminierwalze zurücklegt, wodurch auch gleichzeitig die Verweildauer auf der Laminierwalze erhöht ist. Aufgrund der im Durchmesser größer ausgebildeten Laminierwalze entsteht im Arbeitsprozess selbst keine Verzögerung, jedoch wird der Grad der Aushärtung des Klebemittels wesentlich erhöht.

Nach einer weiteren vorteilhaften Ausgestaltung ist vorgesehen, dass der getriebenen Walze eine Dosierwalze und eine Auftragswalze vorgeschalten ist und über die Dosierwalze das Klebemittel auf die Auftragswalze aufgebracht wird und auf das an der getriebenen Walze entlanggeführte Substrat überträgt. Durch dieses Mehrwalzensystem kann ein dosierter Klebemittelauftrag auf das Substrat erfolgen, wobei vorzugsweise zwischen der Auftragswalze und der getriebenen Walze das Substrat hindurchgeführt und das Klebemittel aufgetragen wird. Durch dieses Mehrwalzensystem kann die Menge des aufzutragenden Klebemittels spezifisch eingestellt werden. Bspw. können Klebemittelschichten von 5 bis 950 g/m² unabhängig von der Walzenlänge aufgetragen werden. Alternativ zum Mehrwalzensystem können auch Streubeschichtungssysteme oder Breitschlitzdüsen zum Einsatz kommen.

Durch die variable Einstellung der Umfangsgeschwindigkeit von der Auftragswalze und der getriebenen Walze wird ermöglicht, dass der auf der Auftragswalze vorhandene Klebemittelfilm bezüglich seiner Stärke nochmals variiert werden kann. Bspw. kann ein dünnerer Klebemittelfilm auf das Substrat aufgetragen werden als dieser von der Auftragswalze zum Auftragpunkt zugeführt wird. Gleichzeitig kann bspw. bei dem Aufbringen des Klebemittels auf ein Gewebe mit einer gröberen Struktur erzielt werden, dass dieses Gewebe vollständig getränkt wird. Auch können Substrate, welche auf der Auftragsseite größere Vertiefungen aufweisen derart mit Klebemittel beschichtet werden, dass diese Vertiefungen oder Nischen vollständig mit Klebemittel gefüllt werden. In anderen Anwendungsfällen kann erzielt werden, dass eine äußerst dünne Schicht auf das Substrat aufgetragen wird und eine vollständige Benetzung gerade nicht erfolgt zur Bildung von beispielsweise einer porösen Beschichtung. Durch die Größe des einstellbaren Spaltes zwischen der Auftragswalze und der getriebenen Walze und/oder den Umfangsgeschwindigkeiten der beiden Walzen zueinander kann anwendungsspezifisch der Auftrag des Klebemittelfilms in seiner Menge bestimmt werden. Bspw. können hier Umfangsgeschwindigkeiten von der Auftragswalze und der getriebenen Walze in einem Verhältnis von 2:1 oder höher einstellbar sein.

Vorteilhafter weise ist vorgesehen, dass das der getriebenen Walze zugeführte Substrat eine Aufheizstation durchläuft, bevor der Klebemittelauftrag erfolgt. Dadurch ist schnelles Abkühlen des Klebemittels verhindert. Bei Substraten mit einer sehr unebenen oder porösen Oberfläche kann eine bessere Vernetzung erfolgen. Unterstützend kann vorteilhafterweise vorgesehen sein, dass die getriebene Walze beheizbar ist. Ebenso können die vorzugsweise angetriebenen Dosierwalze und die Auftragswalze beheizbar sein. Das Klebemittel bleibt somit im Laminierpunkt viskos oder ist zumindest plastisch weist die erforderliche Klebeeigenschaften auf.

Vor der getriebenen Walze ist zumindest eine Spannrolle vorgesehen, welche das Substrat unter Vorspannung der getriebenen Walze zuführt. Dadurch wird einerseits die Bahnspannung reguliert oder aufrechterhalten. Andererseits ist ermöglicht, dass das Substrat mit einem definierten Verlauf zwischen der Auftragswalze und der getriebenen Walze hindurchgeführt wird, wodurch auch die Menge an Klebemittelauftrag einstellbar ist.

Vorteilhafter weise ist vorgesehen, dass die Spannrolle zur Auftragsrolle derart verschiebbar angeordnet ist, dass das Substrat vor Erreichen des Spaltes zwischen der Auftragswalze und getriebenen Walze einen Umschlingungswinkel zur Auftragswalze aufweist. Durch Positionieren der Spannrolle ist der Grad der Umschlingung einstellbar. Durch das Anliegen des Substrates über einen bestimmten Betrages des Umfanges an der Auftragswalze ist eine längere Verweildauer zwischen dem Substrat und dem Klebemittel gegeben sein, so dass eine bessere Durchtränkung des Materials erzielt wird. In einem zwischen der Auftragswalze und der getriebenen Walze gebildeten Spalt wird der Klebemittelfilm auf die vorbestimmte Schichtdicke oder das vorbestimmte Auftragsgewicht pro m² eingestellt.

Zur Bildung einer festen Verbindung der beiden ein Laminat bildenden Substrate ist vorteilhafterweise an dem Außenumfang der Laminierwalze zumindest eine Anpressrolle vorgesehen. Dadurch kann ein Nachpressen des Laminats gegeben sein, wodurch zusätzlich zur Positionierung der beiden Substrate zueinander auch ein weiteres Aushärten des Klebemittels bewirkt werden kann.

Die Laminierwalze ist im Abstand zur getriebenen Walze einstellbar. Somit kann sowohl eine Einstellung auf unterschiedliche Stärken der Substrate erfolgen, als auch ein Zusammenpressen einzelner Komponenten der Substrate gegeben sein, um das gewünschte Produkt zu bilden. Bspw. kann dadurch auch die Dicke der Klebeschicht zwischen einem Gewebe und einem auflaminierten Flies oder einer Schaumschicht bestimmbar sein.

Die als Kühlwalze ausgebildete Laminierwalze weist eine Doppelmantelausführung auf, bei der vorzugsweise ein gegenläufiges Leitungssystem für die Kühlflüssigkeit vorgesehen ist. Dadurch kann über den Umfang der Laminierwalze ein Temperaturausgleich gegeben sein, so dass ein konstanter Betrag der Wärmemenge abführbar ist. Als Kühlflüssigkeit ist vorteilhafterweise Wasser vorgesehen. Zusätzliche Kühlmittel wie Glysantin oder dergleichen können ebenfalls hinzugefügt werden.

Die zuvor genannten Vorteile und vorteilhafte Ausführungsformen gelten analog für die auf das Substrat aufgebrachte Schicht zur Herstellung einer beschichteten Materialbahn.

Die vorliegende Erfindung ist insbesondere bei der Anwendung von sogenannten Heißschmelzklebemittel, Hochleistungsklebemittel oder Klebemittel mit Zusatz- und/oder Füllstoffen vorgesehen, deren Erweichungs- oder Schmelzpunkt bspw. oberhalb von 50° liegen. Diese Klebemittel, wie beispielsweise thermoplastische Klebemittel oder Polymere, thermoplastische Harze oder reaktive Klebemittel eignen sich zum vollständigen oder teilweisen Beschichten oder zum Laminien von unterschiedlichen Substraten wie Textilien, Gewebe, Gewirke Papier, Filme Folien. Der Einsatz von derartigen Heißschmelzklebemittel ermöglicht aufgrund deren hohen Viskosität eine gute Verarbeitung, eine hohe Produktivität aufgrund von zufriedenstellender Beschichtung bei hohen Bahngeschwindigkeiten als auch aufgrund deren umweltfreundlichen Handhabung.

Bei der Herstellung von beschichteten Materialbahnen können neben den oben genannten Klebemittel auch offen oder geschlossen porige Schaumstoffschichten, Fliesschichten, Faserschichten oder Kombinationen hiervon aufgebracht werden. Somit können unterschiedliche rückenbeschichtete Vor-, Zwischen- oder Endprodukte hergestellt werden.

Beispielsweise bei Substraten, welche eine Schlaufenware, Schlingenware oder Filamente aufnehmen, kann das Aufbringen einer Schicht als Klebeschicht oder Schaumstoffschicht genügen, um die Schlaufen, Schlingen oder Filamente zum Substrat zu fixieren. Nur beispielsweise sei hierfür die Herstellung von Möbelstoffen, Dekorstoffen Strickpelzen Matrazendrellen oder dergleichen erwähnt. Durch das Ruhen des beschichteten Substrates auf der Laminierwalze und dem Vorhanden sein eines Anpressdruckes können die Schlingenware, Schlaufenware, oder die Filamente in einer gewünschten Position zum Substrat nach Durchlaufen des Laminierpunktes gehalten und fixiert werden.

In der nachfolgenden Beschreibung und den Patentansprüchen werden bevorzugte Ausführungsbeispiele der Erfindung näher beschrieben. Es zeigen:
- Figur 1: eine schematische Seitenansicht eines Mehrwalzensystems mit einer erfindungsgemäßen Vorrichtung,
- Figur 2: eine schematische Seitenansicht einer temperierbaren Laminierwalze,
- Figur 3: eine schematische Darstellung von zwei hintereinander angeordneten Stationen zur Herstellung von Mehrschichtlaminaten

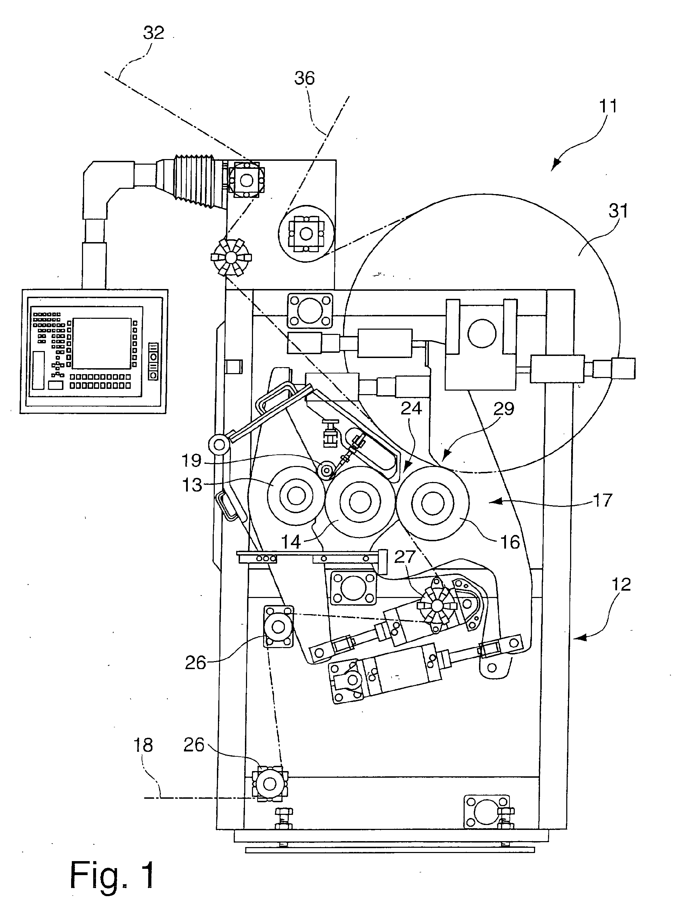

In Figur 1 ist eine schematische Seitenansicht der erfindungsgemäßen Vorrichtung 11 dargestellt. An einem Maschinengestell 12 ist eine Dosierwalze 13, dieser zugeordnet eine Auftragswalze 14 und in Reihe zur Dosierwalze 13 und Auftragswalze 14 eine getriebene Walze 16 vorgesehen. Diese drei vorgenannten Walzen 13, 14, 16 bilden ein Mehrwalzensystem 17, welches zum Beschichten von Substraten 18 mit einem Klebemittel 19 eingesetzt wird. Die Dosierwalze 13, Auftragswalze 14 und Walze 16 sind im wesentlichen in einer Ebene angeordnet. Zwischen der Dosierwalze 13 und der Auftragswalze 14 ist ein Klebemittelvorrat vorgesehen, aus welchem die Auftragswalze 14 durch Rotation im Gegenuhrzeigersinn einen Klebemittelfilm zu einem zwischen der Auftragswalze 14 und der Walze 16 gebildeten Spalt 24 überführt. Diesem Spalt 24 wird das Substrat 18 über Umlenkrollen 26 und zumindest einer Spannrolle 27 zugeführt. Nach Auftragen des Klebemittels 19 auf das Substrat 18 wird das mit Klebemittel 19 beschichtete Substrat 18 entlang der getriebenen Walze 16 bis zu einem Laminierpunkt 29 geführt, der zwischen der getriebenen Walze 16 und einer temperierbaren Laminierwalze 31 gebildet ist.

Ein weiteres Substrat 32 wird über zumindest eine Umlenkrolle 26 und eine Spannrolle 27 der Laminierwalze 31 zugeführt. Vorzugsweise liegt dieses Substrat 32 an der Laminierwalze 31 an, bevor dieses Substrat 32 den Laminierpunkt 29 durchläuft. In dem Laminierpunkt 29 wirkt zwischen der Walze 16 und der Laminierwalze 21 eine Linienpressung, wodurch das Substrat 18 mit dem Klebemittelauftrag zum Substrat 32 verbunden wird, um ein Laminat 36 zu bilden. Dieses Laminat 36 ruht nach dem Verlassen des Laminierpunktes 39 auf der Laminierwalze 31 und wird durch eine Umlenkrolle 26 nach einer Umschlingung von bspw. 220° von der Laminierwalze 31 abgehoben. Der Umschlingungswinkel des Laminats 36 zur Laminierwalze 31 ist frei wählbar. Vorteilhafterweise wird der Umschlingungswinkel jedoch so groß wie möglich gewählt. Die Laminierwalze 31 ist im Umfang gegenüber der getriebenen Walze 16 wesentlich größer ausgebildet und weist zumindest den zweifachen Durchmesser auf. Sowohl durch den Grad der Umschlingung als auch der Größe des Durchmesser der Laminierwalze 31 kann die betragsmäßige Abkühlung des Laminats 36 bestimmt werden.

Thermoplastische Klebemittel weisen die Eigenschaft auf, dass diese oberhalb eines Erweichungs- oder Schmelzpunktes eine Verbindung mit weiteren Materialien eingehen, wohingegen nach einer gewissen Abkühlung die Klebewirkung nicht mehr vorhanden ist. Somit muß zum Zeitpunkt der Bildung des Laminats 36 eine Mindesttemperatur vorhanden sein, um zum einen das Klebemittel auftragen zu können und um zum anderen die Klebewirkung zu erzielen. Nach dem Laminierpunkt 29, zu welchem die Verklebung erfolgt, ist erforderlich, dass eine Abkühlung vor dem Abheben des Laminats 36 von der Laminierwalze 31 gegeben ist, um eine feste Bindung zwischen den einzelnen Substraten 18 und 32 zu erzielen. In Abhängigkeit der Bahngeschwindigkeit, der Dicke der Substrate 18,32 und des Klebemittels 19 kann die Größe der Laminierwalze 31 und der Umschlingungswinkel verändert werden.

Der Laminierpunkt 29 ist vorteilhafterweise so nah als möglich zum Spalt 24 vorgesehen, in welchem die Klebeschicht 19 auf das Substrat 18 aufgetragen wird, damit die Klebeschicht 19 die erforderliche Klebetemperatur aufweist. Unterstützend hierzu kann die Auftragswalze 14 und/oder die getriebene Walze 16 beheizbar sein.

Die Herstellung eine beschichteten Materialbahn 39 erfolgt analog zur Herstellung des Laminats 36, wobei bei der Herstellung der beschichteten Materialbahn 39 ein Substrat 32 nicht zugeführt wird. Ansonsten sind im wesentlichen die gleichen Verfahrensparameter und Bedingungen gegeben wie bei der Herstellung eines Laminats 36.

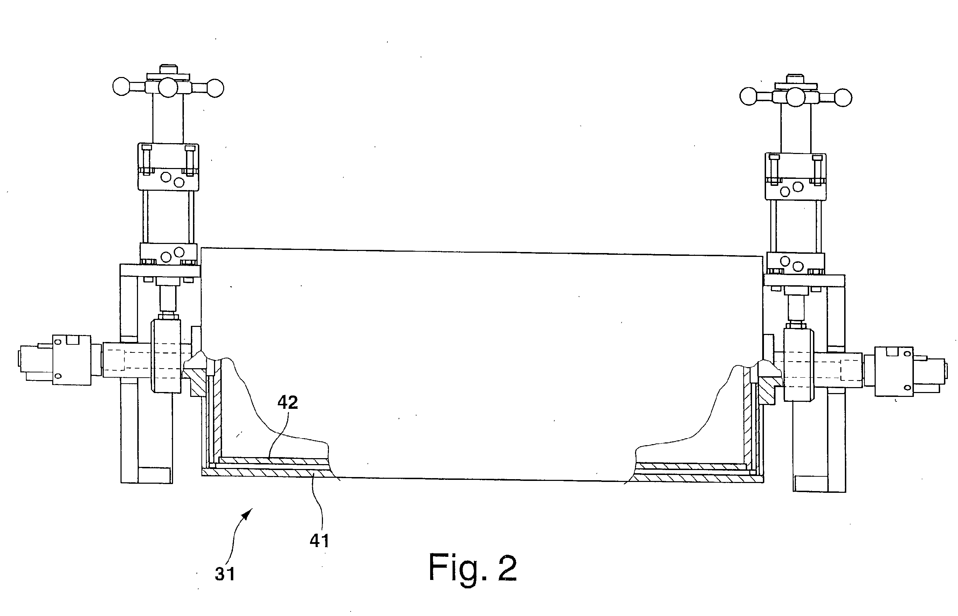

In Figur 2 ist ein schematischer Querschnitt der temperierbaren Laminierwalze 31 dargestellt. An einer äußeren Mantelfläche 41 liegt das Laminat 36 an. Zwischen einer inneren Mantelfläche 42 und der äußeren Mantelfläche 41 wird eine Kühlflüssigkeit durch eine nicht näher dargestellte Leitspirale gegenläufig geführt, so dass die Laminierwalze 31 eine gleichmäßige Temperatur aufweist und eine gleichmäßige Kühlung des auf der äußeren Mantelfläche 41 ruhenden Laminates 36 ermöglicht. Die Laminierwalze 31 ist bspw. antihaftbeschichtet, z. B. mit Teflon, hartverchromt oder aus nicht rostendem Stahl ausgebildet. Als Kühlmedium wird Wasser oder sonst übliche Kühlflüssigkeiten eingesetzt. Ebenso kann die Laminierwalze 31 aufgeheizt werden. Beispielsweise bei der Verwendung von thermoplastischen Klebemittel kann dadurch eine Aufheizzone gebildet werden, um das Laminat oder die Beschichtung nochmals aufzuheizen, damit ein weiteres Substrat aufgebracht oder eine gleichmäßige Verklebung der bestehenden Verbindung ermöglicht ist.

Die Laminierwalze 31 ist gemäß der Figur 2 an einem Gestell 43 vorgesehen. Dadurch kann die Laminierwalze 31 als Moduleinheit bei einem Mehrwalzensystem 17 oder Streubeschichtungssystem als auch in Verbindung mit einer Breitschlitzdüse eingesetzt oder nachgerüstet werden.

Der Ausdruck Substrat ist im weiten Sinne zu verstehen und umfasst Gewebe, Gewirke, Webware, Strickware, Schlingenware, nicht gewebte Materialien, atmungsaktive Materialien, sonstige Textilien, Schaumstrukturen, Fasergewebe, Fliese oder dergleichen. Des weiteren umfasst der Begriff Substrat nicht nur ein einlagiges Material, sondern auch ein mehrlagiges Verbundmaterial oder ein bereits hergestelltes Laminat, welches mit einem oder mehreren weiteren Substraten zu einem neuen Laminat verbunden wird.

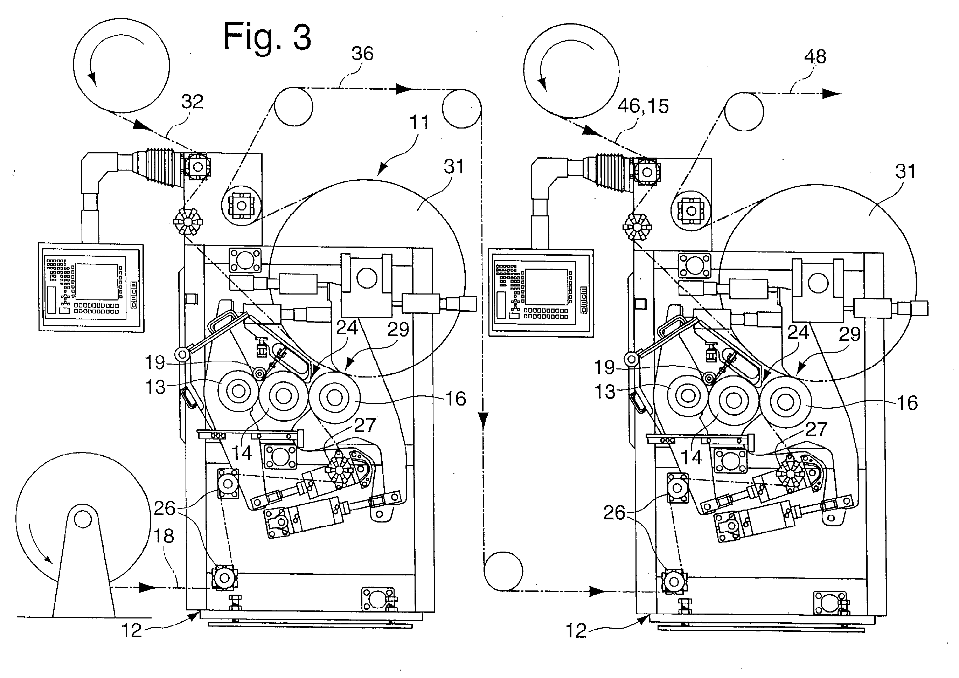

In Figur 3 ist beispielsweise eine Hintereinanderschaltung von zwei Vorrichtungen 11 gemäß Fig. 1 dargestellt. Das in der ersten Station hergestellte Laminat 36, bestehend aus bspw. zwei Substraten 18, 32 wird einer zweiten Bearbeitungsstation zugeführt. Auf das Laminat 36 wird ein weiteres Substrat 46 auflaminiert, um einen neuen Verbund 48 zu bilden. Das Substrat 46 kann einlagig oder ebenfalls als Laminat ausgebildet sein. Anstelle dem Aufbringen des weiteren Substrates kann auch nur eine Schicht 15 aufgebracht werden.

Vorteilhafterweise wird die Laminierung bei einer oder mehreren Stationen derart vorgesehen, dass das zum Laminierpunkt 29 zugeführte Substrat 32, 46 gegenüber dem mit Klebemittel beschichteten Substrat 18 oder Laminat 36 in der Stärke dünner ausgebildet ist. Dies weist den Vorteil auf, dass das dünnere Substrat 32, 46 oder die Schicht 15 unmittelbar an der Laminierwalze 31 anliegt und somit der Kühleffekt erhöht werden kann.

Die Dosierwalze 13, Auftragswalze 14, Walze 16 als auch die Laminierwalze 31 sind angetrieben, wobei die Walze 16 und die Laminierwalze 31 die Bahngeschwindigkeit aufweisen.

## Patentansprüche

1. Vorrichtung zum Laminieren von zumindest einem Substrat (32) auf ein mit Klebemittel (19) beschichtetes Substrat (18) zur Bildung eines Laminats (36), bei der das mit Klebemittel (19) beschichtete Substrat (18) einem zwischen einer getriebenen Walze (16) und einer Laminierwalze (31) gebildeten Laminierpunkt (29) zugeführt wird, wobei das Substrat (32) über die Laminierwalze (31) auf das mit Klebemittel (19) versehenen Substrat (18) zugeführt wird und mit diesem in einem Laminierpunkt (29) verbunden wird, **dadurch gekennzeichnet, dass** das aus den Substraten (18, 32) gebildete Laminat (36) unmittelbar nach dem Laminierpunkt (29) zumindest um wenige Winkelgrade entlang der Laminierwalze (31) geführt ist und dass die Laminierwalze (31) als temperierbare Walze ausgebildet ist.

2. Vorrichtung zum Beschichten von zumindest einer Schicht (15) auf einem Substrat (18) zur Herstellung einer beschichteten Materialbahn (39), bei der das mit der Schicht (15) beschichtete Substrat (18) einem zwischen einer getriebenen Walze (16) und einer Laminierwalze (31) gebildeten Laminierpunkt (29) zugeführt wird, **dadurch gekennzeichnet, dass** die aus der Schicht (15) und dem Substrat (18) gebildete Materialbahn (39) unmittelbar nach dem Laminierpunkt (29) zumindest um wenige Winkelgrade entlang der Laminierwalze (31) geführt ist und dass die Laminierwalze (31) als temperierbare Walze ausgebildet ist.

3. Vorrichtung nach Anspruch 1 oder 2, **dadurch gekennzeichnet, dass** das Laminat (36) oder die Materialbahn (39) nach Durchlaufen des Laminierpunktes (29) entlang der Laminierwalze (31) mit einem Umschlingungswinkel von wenigstens 45°, vorzugsweise wenigstens 180° geführt ist.

4. Vorrichtung nach einem der vorhergehenden Ansprüche, **dadurch gekennzeichnet, dass** die Laminierwalze (31) wenigstens den zweifachen Durchmesser der getriebenen Walze (16) aufweist.

5. Vorrichtung nach einem der vorhergehenden Ansprüche, **dadurch gekennzeichnet, dass** die Laminierwalze (31) als Kühlwalze ausgebildet ist.

6. Vorrichtung nach einem der vorhergehenden Ansprüche, **dadurch gekennzeichnet, dass** der getriebenen Walze (16) eine Dosierwalze (13) und eine Auftragswalze (14), welche das Klebemittel (19) oder die Schicht (15) auf das an der getriebenen Walze (16) entlanggeführte Substrat (32,46) überträgt, vorgeschalten sind.

7. Vorrichtung nach einem der vorhergehenden Ansprüche, **dadurch gekennzeichnet, dass** die Dosierwalze (13), Auftragswalze (14) und getriebene Walze (16) im wesentlichen in einer horizontal verlaufenden Ebene angeordnet sind.

8. Vorrichtung nach Anspruch 6 oder 7, **dadurch gekennzeichnet, dass** die Umfangsgeschwindigkeiten der Auftragswalze (14) und der getriebenen Walze (16) gleich oder in einem Verhältnis von 2:1 oder größer wahlweise einstellbar sind.

9. Vorrichtung nach einem der vorhergehenden Ansprüche, **dadurch gekennzeichnet, dass** das Substrat (18) eine Aufheizstation durchläuft, bevor das Substrat (18) der Walze (16) zugeführt wird.

10. Vorrichtung nach einem der vorhergehenden Ansprüche, **dadurch gekennzeichnet, dass** vor der Walze (16) zumindest eine Spannrolle (27) vorgesehen ist, welche das Substrat (18) unter Vorspannung der Walze (16) zuführt.

11. Vorrichtung nach einem der vorhergehenden Ansprüche, **dadurch gekennzeichnet, dass** das Substrat (18) der Walze (16) derart zugeführt ist, dass das Substrat (18) zumindest teilweise vor einem zwischen der Auftragswalze (14) und der Walze (16) gebildeten Spalt (24) an der Auftragswalze (14) anliegt.

12. Vorrichtung nach Anspruch 9 oder 10, **dadurch gekennzeichnet, dass** die Spannrolle (27) zur Auftragswalze (14) derart verschiebbar angeordnet ist, dass das Substrat (18) vor Erreichen des Spaltes (24) zwischen der Auftragswalze (14) und der Walze (16) einen Umschlingungswinkel zur Auftragswalze (14) aufweist, der einstellbar ist.

13. Vorrichtung nach einem der vorhergehenden Ansprüche, **dadurch gekennzeichnet, dass** der Spalt (24) zwischen Auftragswalze (14) und getriebener Walze (16) einstellbar ist.

14. Vorrichtung nach einem der vorhergehenden Ansprüche, **dadurch gekennzeichnet, dass** an dem Außenumfang der Laminierwalze (31) zumindest eine Anpressrolle vorgesehen ist.

15. Vorrichtung nach einem der vorhergehenden Ansprüche, **dadurch gekennzeichnet, dass** die Laminierwalze (31) im Abstand zur Walze (16) zur Dosierung des Laminierpunktes (29) einstellbar ist.

16. Vorrichtung nach einem der vorhergehenden Ansprüche, **dadurch gekennzeichnet, dass** die Walze (16) und/oder Auftragswalze (14) und/oder Dosierwalze (13) beheizbar ist.

17. Vorrichtung nach einem der vorhergehenden Ansprüche, **dadurch gekennzeichnet, dass** die Walze (16) und/oder Auftragswalze (14) und/oder Dosierwalze (13) und/oder Laminierwalze (31) angetrieben sind.

18. Vorrichtung nach einem der vorhergehenden Ansprüche, **dadurch gekennzeichnet, dass** die Laminierwalze (31) eine Doppelmantelausführung aufweist, bei der vorzugsweise ein gegenläufiges Leitsystem für die Kühlflüssigkeit vorgesehen ist.

19. Vorrichtung nach Anspruch 2, **dadurch gekennzeichnet, dass** die Schicht (15) als Klebemittelschicht, insbesondere als thermoplastisches Klebemittel, als Fliesschicht, oder als offen oder geschlossen porige Schaumstoffschicht oder dergleichen ausgebildet ist.
